# EUROPEAN PATENT APPLICATION

(11) **EP 4 652 852 A1**
(43) Date of publication of application: **26.11.2025**
(21) Application number: 25176958.4
(22) Date of filing: 16.05.2025
(51) Int. Cl.: A23G 1/00, A23G 1/21, A23G 1/54, A23G 1/20

(54) **METHOD AND APPARATUS FOR PRODUCING HOLLOW PRODUCTS MADE OF A FOODSTUFF MATERIAL THAT CAN BE FORMED IN A MOULD**

(30) Priority: 22.05.2024 IT 202400011617
(71) Applicant: Soremartec S.A., 2633 Senningerberg (LU)
(72) Inventor: RATTO, Gabriele, L-2633 Senningerberg (LU); MANISCALCO, Francesco, L-2633 Senningerberg (LU); PREST, Fabrizio, L-2633 Senningerberg (LU)
(74) Representative: Buzzi, Notaro & Antonielli d'Oulx S.p.A.

(57) **Abstract**

A method for producing hollow products made of a foodstuff material that can be formed in a mould, preferably chocolate, comprising the steps of:
- providing a mould (40) comprising a mould cavity (44) delimited by a mould surface (42);
- dispensing into said mould cavity (44) a pre-set amount of said foodstuff material;
- subjecting said mould (40), in the mould cavity (44) of which said pre-set amount of material is contained, to at least one movement of rotation about an axis of rotation (I1, I2) for distributing said foodstuff material over the entire mould surface (42); and
- during the step where said mould (40) is subjected to the movement of rotation, setting selected portions (43) of said mould surface (42) in a condition of heat exchange with a thermal-conditioning fluid so as to maintain said selected portions (43) of said mould surface (42) at a temperature different from, preferably lower than, that of the other portions of said mould surface (42).

## Description

The present invention relates to a method for producing hollow products made of a foodstuff material that can be formed in a mould, preferably chocolate.

In particular, the present invention regards a method of the type comprising the steps of:
- providing a mould comprising a mould cavity delimited by a mould surface;
- dispensing into said mould cavity a pre-set amount of said foodstuff material; and
- subjecting said mould, in the mould cavity of which said pre-set amount of material is contained, to at least one movement of rotation about an axis of rotation in order to distribute said foodstuff material over the entire mould surface.

With reference to applications with chocolate, the method referred to above is commonly implemented via a machine for modelling the chocolate comprising a plurality of moulds, which, during operation of the machine, are subjected to a motion of revolution about a common axis of revolution, and simultaneously to a movement of rotation about respective axes of rotation.

In this context, the present applicant has set himself the aim of obtaining a solution improved as compared to the prior art that will enable production of hollow products that may even have relatively complex shapes, at the same time guaranteeing an excellent production quality.

The above object is achieved by adopting a method according to claim 1.

The present invention moreover regards a machine according to claim 9.

The claims annexed hereto form an integral part of the teaching provided herein.

Further characteristics and advantages of the present invention will emerge clearly from the ensuing description with reference to the annexed drawings, which are provided purely by way of non-limiting example and in which:
- Figure 1 is a schematic illustration of the method described herein according to a preferred embodiment;
- Figure 2 is a schematic illustration of an example of the machine described herein;
- Figure 3 illustrates an example of mould used in the method and in the machine described herein; and
- Figure 4 represents the mould of Figure 3 in an open condition.

In the ensuing description various specific details are illustrated aimed at enabling an in-depth understanding of the embodiments. The embodiments may be obtained without one or more of the specific details, or with other methods, components, or materials, etc. In other cases, known structures, materials, or operations are not illustrated or described in detail so that various aspects of the embodiment will not be obscured.

The references used herein are provided merely for convenience and hence do not define the sphere of protection or the scope of the embodiments.

The method described herein has the function of producing hollow products made of a foodstuff material that can be formed in a mould. The method has been devised specifically for producing hollow products with a base of chocolate or surrogates thereof, possibly also with inclusions (for example, ground or chopped nuts, cereals, meringue, biscuits, etc.). In any case, the method described herein can be used also with foodstuff materials of some other type, for example caramel, toffee, emulsions of oils or fats in general, with or without sugar, meringue, concentrated sugary substances, etc.

In general, the method described herein comprises the following steps:
- providing a mould that includes a mould cavity delimited by a mould surface (step 1);
- dispensing into the mould cavity a pre-set amount of the foodstuff material (step 2); and
- subjecting the mould, in the mould cavity of which there is contained the aforesaid pre-set amount of material, to at least one movement of rotation about an axis of rotation in order to distribute the foodstuff material over the entire mould surface (step 3).

According to an important characteristic of the solution described herein, the method envisages that, while the mould is subjected to the aforesaid movement of rotation, selected portions of the mould surface are set in a condition of heat exchange with a thermal-conditioning fluid, preferably a cooling fluid, so that said selected portions of the mould surface are at a temperature different from, preferably lower than, the remaining portions of the surface itself (step 3').

Preferably, the step of setting the selected portions of the mould surface in a condition of heat exchange with the thermal-conditioning fluid includes:
- providing on the mould at least one duct that extends in the proximity of the selected portions of the mould surface; and
- feeding a flow of the thermal-conditioning fluid through the at least one duct, setting the flow of the thermal-conditioning fluid in a condition of heat exchange with the selected portions of the mould surface.

The present applicant has noted that a problem that may be encountered in the solutions according to the prior art lies in the fact that the distribution of the chocolate over the mould surface may not be homogeneous and rather may vary markedly in those applications that envisage the production of hollow products having complex shapes, possibly with inclusions.

In the above applications, on the end product it is possible to identify parts having a thickness of the chocolate that is so reduced as to assume a practically translucid appearance, in addition to constituting points where the product is likely to break.

To overcome the above drawback, it is known to dispense into the mould an amount of chocolate in excess with the intent of increasing globally the thickness of the walls of the product, including the aforesaid parts.

However, not always is such a remedy sufficient and above all not always is it realizable in the context of industrial applications.

On the other hand, it may be noted that the use of amounts of chocolate in excess also leads to an increase in production costs.

To return to the method described herein, thanks to an intense experimental activity, the present applicant has, instead, been able to note that by setting one or more selected portions of the mould surface in a condition of heat exchange with a cooling fluid during the movement of rotation of the mould, it is possible to obtain, on the same portions of the mould surface, parts of the end product characterized by a thickness increased as compared to the thickness that can be obtained in the absence of such a cooling action.

The above can be explained by the fact that, by way of the heat exchange set up with the cooling fluid, the aforesaid selected portions assume a temperature lower than that of the other portions of the mould surface, and hence the chocolate that goes thereon as a result of rotation of the mould solidifies faster and hence is more likely to remain around these portions than on the other non-cooled portions.

The present applicant has hence understood that the aforesaid effect of increase in the thickness of the walls of chocolate can advantageously be exploited to offset the opposite phenomenon that may arise in "critical" portions of the mould surface.

On some portions of the mould surface it may in fact happen that the amount of chocolate that moves onto them - i.e., that flows onto them - during the movement of rotation of the mould is, statistically, sensibly less than the amount that deposits on the other portions of the mould surface, with the result that the parts of product obtained on them have a thickness considerably smaller than the remaining parts.

By the term "critical portions" is here meant in general the portions of the mould surface on which there is the risk of obtaining parts of the end product having a thickness smaller than a pre-set minimum value in the absence of the heat exchange envisaged by the solution described herein.

The reason for such a phenomenon is to be sought in the particular conformations that the critical portions in question may have.

In this connection, the present applicant has been able to discover experimentally that the phenomenon in question frequently occurs in portions of the mould surface that present one or more of the following characteristics:
- a curved surface with a small radius of curvature;
- an irregular surface pattern;
- complex surfaces in general; and
- extensive planar surfaces.

In view of the foregoing, the solution described herein envisages selecting the critical portions of the mould surface and subjecting these portions to heat exchange with the cooling fluid to keep them at a temperature lower than that of the other portions of the mould surface.

The effect of the increase in the thickness of the chocolate thus obtained will come to offset the effect of thinning that characterizes the aforesaid critical portions of the mould surface so that the parts of chocolate obtained thereon will have a thickness in any case greater than the pre-set limit value.

It may in any case be noted that the solution described herein can be used not only to overcome the drawbacks referred to above of the prior art, but also to obtain products having localized parts with increased thickness, for altogether different purposes, for example for aesthetic purposes, functional purposes, etc. In this case, the selected portions will not necessarily correspond to the critical portions discussed above. The person skilled in the sector will therefore understand that the pre-set limit value for the thickness of the parts of the product obtained on the selected portions of the mould surface may vary according to the requirements of the specific applications.

The cooling fluid may be air, preferably at a temperature lower than 15°C, even more preferably at a temperature lower than or equal to 10°C.

In alternative embodiments, the cooling fluid may, for example, be water, glycol, nitrogen, or some other fluid commonly used in the art for functions similar to the one described above.

The present applicant has been able to note that the best results in terms of quality of the end product are obtained when the selected portions are at a temperature lower by at least 8°C than that of the other portions of the mould surface. On the other hand, the selected portions do not necessarily have to be at one and the same temperature, but may in turn be at different temperatures, according to the requirements of the specific applications.

It will on the other hand be evident to the person skilled in the sector that the solution described herein not only makes it possible to prevent formation of parts of product having a thickness smaller than a pre-set limit value, but also to obtain hollow products, the walls of which have a thickness more uniform along their extension as compared to the products according to the prior art.

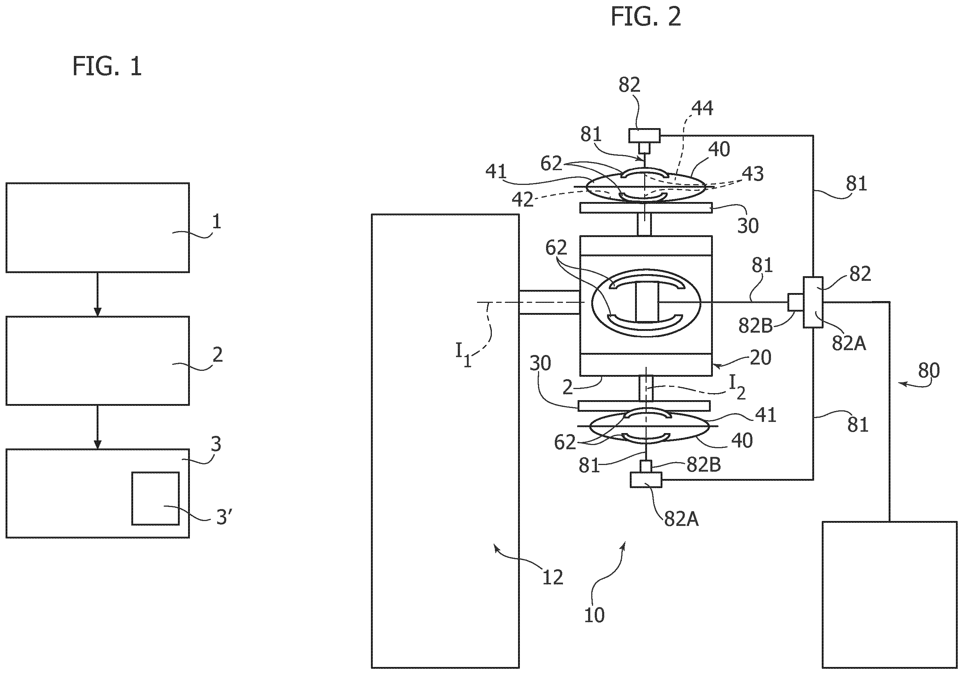

With reference now to Figure 2, this illustrates an example of the machine described herein for producing hollow products made of a foodstuff material that can be formed in a mould.

In one or more preferred embodiments like the one illustrated, the machine described herein -designated as a whole by the reference number 10 - comprises a base frame 12, mounted in cantilever fashion on which is a rotor 20 that turns about a preferably horizontal axis of rotation I1.

The rotor 20 carries on it a series of plates 30, which are arranged along the periphery of the rotor 20 and turn about respective axes of rotation I2, each oriented in a radial direction with respect to the axis of rotation I1.

Each of the plates 30 receives on itself a respective mould 40, which is removably connected to the plate 30.

The individual mould 40 has a mould surface 42 that delimits a mould cavity 44.

In the example illustrated, each mould 40 has a single mould cavity 44, but it is clear that the individual mould 40 could instead have a plurality of mould cavities 44.

The machine 10 comprises a driving system (not illustrated) for driving the movement of rotation of the rotor 20 about the axis of rotation I1, and simultaneously the movements of rotation of the plates 30 about their respective axes of rotation I2.

Operation of the machine envisages that a pre-set amount of chocolate is dispensed within the mould cavity 44 of each mould 40 and that the mould 40, filled with chocolate, is then positioned on one of the plates 30.

When all the moulds 40 have been filled and arranged on the plates 30, the rotor 20 and the plates 30 are set in rotation for a pre-set time.

In this way, each mould 40 is subjected to a motion of revolution about the axis of rotation I1 and to a motion of rotation about its respective axis of rotation I2.

This combined movement has the effect of moving the chocolate contained in the mould cavity 44 so that it will come to coat the entire mould surface 42; simultaneously, the chocolate solidifies gradually.

At the end of the process, within the mould cavity 44 there will be obtained a hollow chocolate product, the outer surface of which reproduces precisely the shape of the mould surface 42.

According to an important characteristic of the solution described herein, the machine 10 comprises a cooling system configured for setting, during the movement of rotation of the moulds 40, selected portions 43 of the mould surfaces 42 in a condition of heat exchange with a cooling fluid. The selected portions 43 may correspond to the critical portions of the mould surface discussed above.

In particular, in one or more preferred embodiments like the one illustrated, the aforesaid cooling system comprises, for each mould 40, at least one duct 62 that extends in the proximity of the selected portions 43 of the mould surface 42 and that is traversed by a flow of the cooling fluid, setting the latter in a condition of heat exchange with the selected portions 43.

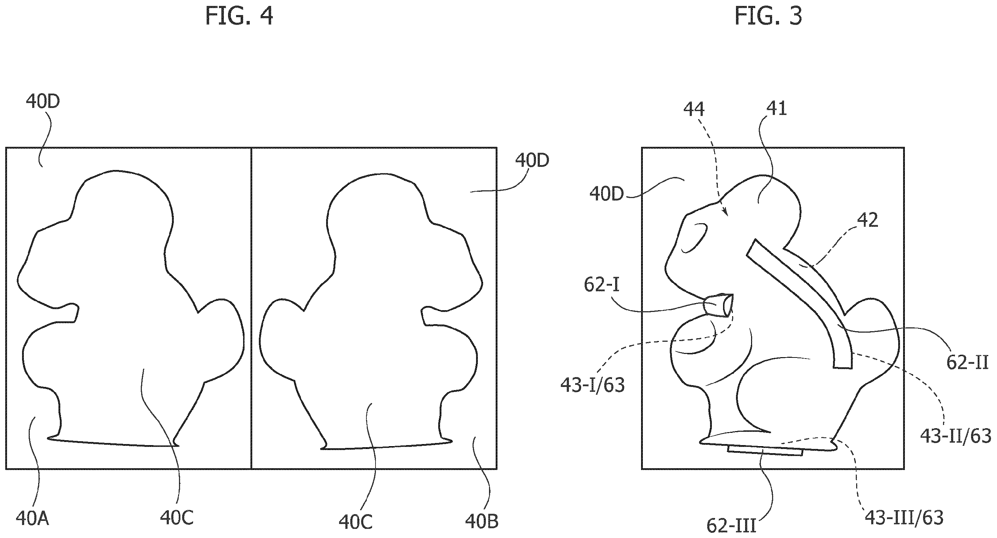

Figures 3 and 4 illustrate an example of a mould 40.

In a way in itself known, the mould 40 comprises two half-moulds 40A, 40B, which are hinged together and can be moved between an open condition and a closed condition.

Each half-mould comprises a hollow portion 40C and a generically planar portion 40D that surrounds it.

In their closed condition, the planar portions 40D of the two half-moulds 40A, 40B are set in mutual contact, and the respective hollow portions 40C form together the mould cavity 44.

It will be understood that the mould surface 42 is formed by the ensemble of the inner surfaces of the hollow portions 40C of the two half-moulds 40A, 40B.

The mould 40 comprises a first duct 62-I located in a position corresponding to a portion 43-I of the mould surface 42, a second duct 62-II located in a position corresponding to the portion 43-II of the mould surface 42, and a third duct 62-III located in a position corresponding to the portion 43-III of the mould surface 42.

The portions 43-I, 43-II, 43-III of the mould surface 42 represent the "selected" portions, according to the teachings discussed above.

In the example of Figures 3 and 4, the mould surface 42 defines the three-dimensional shape of a stylized or imaginary animal; as regards this shape, it may be noted that the portion 43-I is located in a position corresponding to the neck of the animal, the portion 43-II is located in the area of connection between the tail and the back, and finally the portion 43-III is located in a position corresponding to the base of the product.

Incidentally, it may be noted that the portions 43-I and 43-II have a curved conformation defined by a small radius of curvature, whereas the portion 43-III has a planar configuration (which is ill-suited to collecting the chocolate as compared to the curved conformations of the other portions).

In general, the selected portions 43 (i.e., critical portions) of the mould surface 42 can be identified experimentally through the production of a lot of products obtained in a conventional way followed by a close examination of these products to identify the parts thereof that have a thickness smaller than a predefined limit value.

The selected portions 43 will hence correspond to those portions of the mould surface 42 where the aforesaid parts of product having a thickness below the predefined limit value were obtained.

As mentioned above, the solution described herein can be implemented also for producing hollow products having parts with increased thickness; in this case, the selected portions 43 will correspond to those portions of the mould surface 42 where the parts of the product having an increased thickness are to be obtained.

In one or more preferred embodiments like the one illustrated, the duct 62 constitutes a distinct accessory component, which is fixed on the outer surface 41 of the mould 40, for example with the aid of adhesive material (e.g., adhesive polymers).

In alternative embodiments, the duct 62 may instead be obtained directly in the structure of the mould 40, for example in the form of a hole or channel made in the thickness of the wall of the mould via an operation of drilling or other equivalent operation that involves removal of material.

Preferably, the duct 62 is set in a condition of heat exchange with the individual selected portion 43 of the mould surface 42 by means of an area 63 made of thermally conductive material.

In the case of the duct 62 fixed to the outer surface of the mould 40, the area 63 will comprise, for example, the adhesive material that fixes the duct 62 to the outer surface 41 of the mould 40 and the wall of the mould that separates the outer surface 41 from the mould surface 42.

In the case, instead, of the duct 62 obtained in the mould 40, the area 63 will be constituted only by the portion of the wall of the mould that separates the duct 62 from the mould surface 42.

Preferably, the thermally conductive area 63 has an extension approximately equal to the area of the selected portion 43.

In one or more preferred embodiments like the one illustrated, the cooling system of the machine 10 further comprises a unit 70 for feeding the cooling fluid to and through the ducts 62.

In one or more preferred embodiments like the one illustrated, the supply unit 70 is fixed with respect to the base frame 12 of the machine and is connected to the ducts 62 by way of a hydraulic or pneumatic connection system 80 that develops between the supply unit 70 and the various ducts 62 associated to the moulds 40.

In one or more preferred embodiments like the one illustrated, the system 80 comprises tubes 81, preferably hoses, and a series of connectors 82.

Each connector 82 comprises a part 82A for inlet of the fluid and a part 82B for outlet of the fluid, which are able to turn with respect to one another so that the tube 81 connected to the outlet part 82B will be able to follow the movement of rotation of the mould 40 associated thereto about the axis of rotation I1 or about the axis of rotation I2.

In one or more preferred embodiments like the one illustrated, the supply unit 70 comprises a device for generating a difference of pressure, for example a compressor, in order to generate a flow of the cooling fluid through the tubes 81 and the ducts 62.

In one or more preferred embodiments, the machine 10 may further comprise a cooling device (not illustrated) configured for bringing the temperature of the cooling fluid within a pre-set interval before the cooling fluid is fed to the ducts 62.

Of course, without prejudice to the principle of the invention, the details of construction and the embodiments may vary, even significantly, with respect to what has been illustrated herein purely by way of non-limiting example, without thereby departing from the scope of the invention, as defined by the annexed claims.

## Claims

1. A method for producing hollow products made of a foodstuff material that can be formed in a mould, preferably chocolate, comprising the steps of:
- providing a mould (40) comprising a mould cavity (44) delimited by a mould surface (42);
- dispensing into said mould cavity (44) a pre-set amount of said foodstuff material;
- subjecting said mould (40), in the mould cavity (44) of which said pre-set amount of material is contained, to at least one movement of rotation about an axis of rotation (I1, I2) for distributing said foodstuff material over the entire mould surface (42); and
- during the step where said mould (40) is subjected to the movement of rotation, setting one or more selected portions (43) of said mould surface (42) in a condition of heat exchange with a thermal-conditioning fluid, preferably a cooling fluid, so as to maintain said one or more selected portions (43) of said mould surface (42) at a temperature different from, preferably lower than, that of the other portions of said mould surface (42).

2. The method according to claim 1, wherein setting said one or more selected portions (43) of said mould surface (42) in a condition of heat exchange with the thermal-conditioning fluid includes:
- providing on said mould (40) at least one duct (62) that extends in the proximity of said one or more selected portions (43) of said mould surface (42); and
- feeding a flow of the conditioning fluid through said at least one duct (62), setting said flow of the conditioning fluid in a condition of heat exchange with said one or more selected portions (43) of said mould surface (42).

3. The method according to claim 2, wherein said thermal-conditioning fluid is cooled air, preferably at a temperature lower than 15°C, even more preferably at a temperature lower than or equal to 10 °C.

4. The method according to any one of the preceding claims, wherein said one or more selected portions of said mould surface correspond to one or more portions of said mould surface where the amount of material that moves onto them during rotation of the mould is on average less than that of the other portions of the mould surface.

5. The method according to any one of the preceding claims, comprising the following steps for identifying said one or more selected portions of the mould surface:
- producing in said mould at least one hollow product in the absence of said heat exchange with said cooling fluid;
- examining said at least one hollow product and identifying one or more parts thereof having a thickness smaller than a predefined limit value; and
- identifying as selected portion each portion of the mould surface on which a part of said product having a thickness smaller than the predefined limit value has been obtained.

6. A hollow product made of a foodstuff material that can be formed in a mould, preferably chocolate, through implementation of a method according to any one of the preceding claims.

7. A machine for producing hollow products made of a foodstuff material that can be formed in a mould, preferably chocolate, comprising:
- at least one mould (40) comprising a mould cavity (44) delimited by a mould surface (42), said mould cavity (44) being designed to receive a pre-set amount of said foodstuff material;
- a unit (20; 30) for moving said mould configured for subjecting said mould (40) to at least one movement of rotation about an axis of rotation (I1, I2) so as to distribute said foodstuff material over the entire mould surface (42); and
- a thermal-conditioning system (62, 80, 70) configured for setting, during the movement of rotation of said mould (40), selected portions of said mould surface (42) in a condition of heat exchange with a thermal-conditioning fluid, preferably a cooling fluid, so as to maintain said selected portions (43) of said mould surface (42) at a temperature different from, preferably lower than, that of the other portions of said mould surface (42).

8. The machine according to claim 7, wherein said thermal-conditioning system comprises at least one duct (62), which extends in the proximity of said selected portions (43) of said mould surface (42), and a supply unit (70), configured for feeding a flow of the thermal-conditioning fluid through said at least one duct (62), setting said flow of the thermal-conditioning fluid in a condition of heat exchange with said selected portions (43) of said mould surface (42).

9. The machine according to claim 8, wherein said thermal-conditioning system comprises a hydraulic or pneumatic connection system for connecting the supply unit (70) to the at least one duct (62), said connection system comprising a series of tubes and at least one connector comprising a part (82A) for inlet of the fluid and a part (82B) for outlet of the fluid, which are able to turn with respect to one another so that a tube of the series of tubes connected to the outlet part (82B) of the connector will be able to follow the at least one movement of rotation of the mould (40) about the axis of rotation (I1, I2).
